# EUROPÄISCHE PATENTSCHRIFT

(11) **EP 2 760 695 B1**
(45) Veröffentlichungstag und Bekanntmachung des Hinweises auf die Patenterteilung: **08.06.2016**
(21) Anmeldenummer: 12746291.9
(22) Anmeldetag: 10.08.2012
(51) Int. Cl.: B60L 11/18, B60L 3/12

(54) **VERFAHREN ZUM BETREIBEN EINES MIT EINEM ELEKTROMOTOR ANTREIBBAREN FAHRZEUGS**
METHOD FOR OPERATING A VEHICLE DRIVEN BY AN ELECTRIC MOTOR
PROCÉDÉ DE FONCTIONNEMENT POUR UN VÉHICULE POUVANT ÊTRE ENTRAÎNÉ PAR UN MOTEUR ÉLECTRIQUE

(30) Priorität: 30.09.2011 DE 102011114549
(43) Veröffentlichungstag der Anmeldung: 06.08.2014
(73) Patentinhaber: Audi AG, 85045 Ingolstadt (DE)
(72) Erfinder: STRASSER, Roman, 85080 Gaimersheim (DE)
(74) Vertreter: Herbst, Matthias Heinz
(86) Internationale Anmeldenummer: PCT/EP2012/003438
(87) Internationale Veröffentlichungsnummer: WO 2013/045009

(56) Entgegenhaltungen:
- WO-A2-2010/033517
- US-A1- 2009 157 289
- US-A1- 2010 138 142
- US-A1- 2011 032 110

## Beschreibung

Die Erfindung betrifft ein Verfahren zum Betreiben eines mit einem Elektromotor antreibbaren Fahrzeugs. Des Weiteren betrifft die Erfindung ein Fahrzeug mit einem Elektromotor zum Antrieb desselben.

Aus dem allgemeinen Stand der Technik sind die unterschiedlichsten, mit einem Elektromotor antreibbaren Fahrzeuge bekannt. Hierbei kann es sich um reine Elektrofahrzeuge, also um Fahrzeuge, die außer einem Elektromotor keine weitere Antriebsquelle besitzen, um Elektrofahrzeuge mit einem sogenannten Range-Extender, also einem zusätzlichen Verbrennungsmotor in dem Elektrofahrzeug, der die Reichweite desselben verlängert, oder um sogenannte Plug-in-Hybridfahrzeuge handeln, bei denen die Hauptantriebsquelle des Fahrzeugs zwar ein Verbrennungsmotor ist, die jedoch zusätzlich einen Elektromotor aufweisen, dessen Energiespeicher von außerhalb des Fahrzeugs aufgeladen werden kann.

Ein prinzipielles Problem dieser Fahrzeuge besteht in ihrer relativ geringen Reichweite, die sich durch die im Vergleich zu einem mit einem Verbrennungsmotor betriebenen Fahrzeug geringe Kapazität des Energiespeichers ergibt. Aus diesem Grund bestehen derzeit noch gewisse Vorbehalte gegenüber diesen Fahrzeugen.

Aus der US 2011/0032110 A1 ist eine Vorrichtung bekannt, mit der es bei einem Elektrofahrzeug möglich ist, bestimmte Daten hinsichtlich des Ladezustands der Batterie an den Fahrer weiterzugeben. Insbesondere dient diese Vorrichtung dazu, vor oder während einer Fahrt zu berechnen, ob ein bestimmtes Fahrtziel erreicht werden kann, und dem Fahrer gegebenenfalls Informationen hinsichtlich nahegelegener Ladestationen zu geben, um gegebenenfalls die Batterie aufzuladen. In einer Ausführungsform können bestimmte Informationen an ein Mobiltelefon des Benutzers weitergegeben werden.

Die US 2009/0157289 A1 beschreibt ein Navigationssystem für ein Kraftfahrzeug, das in der Lage ist, die Restfüllmenge eines Kraftstofftanks zu berechnen und in Abhängigkeit vom gewählten Fahrtziel dem Fahrer gegebenenfalls eine sich in der Nähe befindende Tankstelle vorzuschlagen.

Aus der DE 10 2010 038 400 A1 ist eine Türsteuerung und Ladesteuerung für ein Elektrofahrzeug bekannt. Dabei wird die Lademenge einer Batterie, die zur Versorgung des das Fahrzeug antreibenden Elektromotors dient, an ein mobiles Terminal übertragen, welches hieraus die Restreichweite des Fahrzeugs schätzt.

Die DE 10 2008 039 907 A1 beschreibt ein Fahrzeug mit einem elektrischen Energiespeicher und einer Energiequelle, die mit einer Aktivierungsvorrichtung versehen ist. Des Weiteren ist eine Startvorrichtung vorgesehen, die dazu ausgebildet ist, die Aktivierungsvorrichtung kabellos zu aktivieren. Auf diese Weise soll es dem Fahrer möglich sein, den elektrischen Energiespeicher mittels kabelloser Übertragung aufzuladen.

Es ist Aufgabe der vorliegenden Erfindung, ein Verfahren zum Betreiben eines mit einem Elektromotor antreibbaren Fahrzeugs sowie ein entsprechendes Fahrzeug zu schaffen, die einem Fahrer eines solchen Fahrzeugs den Umgang mit demselben erleichtern.

Erfindungsgemäß wird diese Aufgabe durch die in Anspruch 1 genannten Merkmale gelöst.

Dadurch, dass erfindungsgemäß die mit dem Fahrzeug zurücklegbare Restdistanz an ein mobiles Endgerät übertragen wird, ist der Fahrer des Fahrzeugs stets über die Reichweite des Fahrzeugs informiert und kann, bevor er mit seinem Fahrzeug zu einer weiteren Fahrt startet, dafür sorgen, dass der Energiespeicher ausreichend aufgeladen ist. Dies erleichtert den Umgang des Fahrers mit einem solchen Fahrzeug erheblich.

Erfindungsgemäß ist des Weiteren vorgesehen, dass die mit der in dem Energiespeicher gespeicherten Energie zurücklegbare Restdistanz an eine zum öffnen und Schließen des Fahrzeugs und/oder zum Starten und Stoppen des Elektromotors dienende Einrichtung übertragen wird. Dies bietet dem Fahrer ebenfalls die Möglichkeit, zu jeder Zeit und im Prinzip an jedem Ort, an dem er sich aufhält, auf die entsprechenden gespeicherten Daten zurückzugreifen.

In einer vorteilhaften Weiterbildung der Erfindung kann vorgesehen sein, dass der Ladezustand des Energiespeichers und/oder die mit der in dem Energiespeicher gespeicherten Energie zurücklegbare Restdistanz beim Abstellen des Elektromotors übertragen wird. Auf diese Weise ist sichergestellt, dass auf das mobile Endgerät stets die exakten, für den Fahrer hilfreichen Werte übertragen werden.

Alternativ oder zusätzlich kann vorgesehen sein, dass der Ladezustand des Energiespeichers und/oder die mit der in dem Energiespeicher gespeicherten Energie zurücklegbare Restdistanz beim Abschließen einer Fahrertür des Fahrzeugs übertragen wird.

Eine weitere vorteilhafte Ausgestaltung der Erfindung kann darin bestehen, dass der Ladezustand des Energiespeichers und/oder die mit der in dem Energiespeicher gespeicherten Energie zurücklegbare Restdistanz an ein Mobiltelefon übertragen wird. Durch die Übertragung der Daten auf ein Mobiltelefon ist auf sehr einfache Weise sichergestellt, dass der Fahrer des Fahrzeugs stets problemlos auf den Ladezustand des Energiespeichers bzw. auf die mit seinem Fahrzeug zurücklegbare Restdistanz zugreifen kann, insbesondere wenn er sich weit entfernt von seinem Fahrzeug aufhält.

Besonders vorteilhaft ist es, wenn als zum Öffnen und Schließen des Fahrzeugs und/oder zum Starten und Stoppen des Elektromotors dienende Einrichtung ein Schlüssel verwendet wird.

Ein Fahrzeug, mit dem die der Erfindung zugrunde liegende Aufgabe gelöst wird, ist in Anspruch 7 angegeben.

Mit diesem Fahrzeug kann durch die dabei vorgesehene Einrichtung zum Übertragen der mit der in dem Energiespeicher gespeicherten Energie zurücklegbaren Restdistanz des Fahrzeugs an ein mobiles Endgerät das oben beschriebene Verfahren in sehr einfacher Weise durchgeführt werden, um den Fahrer des Fahrzeugs stets über den Ladezustand des Energiespeichers zu informieren.

Dabei ist vorgesehen, dass das mobile Endgerät als eine zum öffnen und Schließen des Fahrzeugs und/oder zum Starten und Stoppen des Elektromotors dienende Einrichtung ausgebildet ist. Da der Fahrer eine solche Einrichtung zum Öffnen und Schließen des Fahrzeugs und/oder zum Starten und Stoppen des Elektromotors ohnehin meist mit sich führt, stellt diese Lösung keinerlei zusätzlichen Aufwand dar.

Nachfolgend ist ein Ausführungsbeispiel der Erfindung anhand der Zeichnung prinzipmäßig dargestellt.

Es zeigt:

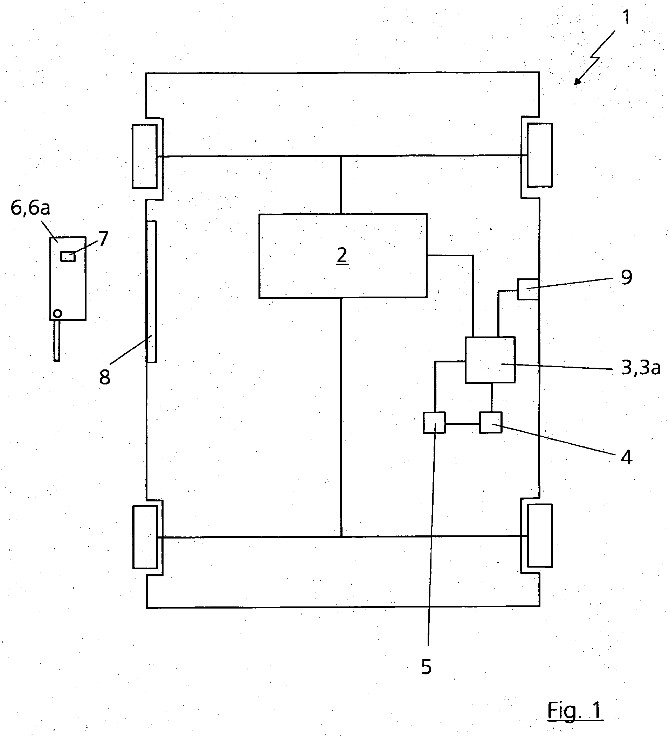

- Fig. 1: ein mit einem Elektromotor zum Antrieb desselben ausgestattetes Fahrzeug, mit dem das erfindungsgemäße Verfahren durchgeführt werden kann.

Fig. 1 zeigt in einer sehr schematischen Darstellung ein Fahrzeug 1, das zu seinem Antrieb einen Elektromotor 2 aufweist. Zusätzlich zu dem Elektromotor 2 könnte das Fahrzeug 1 auch einen Verbrennungsmotor oder eine andere zusätzliche Antriebsquelle aufweisen. Der Elektromotor 2 wird aus einem Energiespeicher 3 mit elektrischem Strom versorgt, der im dargestellten Ausführungsbeispiel als Batterie 3a ausgebildet ist. Mit dem Energiespeicher 3 ist im vorliegenden Fall eine Speichereinrichtung 4 verbunden, die in der Lage ist, den Ladezustand des Energiespeichers 3 und/oder einer mit der in dem Energiespeicher 3 gespeicherten Energie von dem Fahrzeug 1 zurücklegbaren Restdistanz, also der Reichweite des Fahrzeugs 1, ausgebildet ist. Da der Ladezustand des Energiespeichers 3 und die mit dem Fahrzeug 1 zurücklegbare Restdistanz unmittelbar aneinander gekoppelt sind, sind in der Speichereinrichtung 4 vorzugsweise beide Werte gespeichert. Zusätzlich kann eine an sich bekannte und daher nicht näher beschriebene Einrichtung vorgesehen sein, die aus dem Ladezustand des Energiespeichers, gegebenenfalls, unter Einbeziehung einer Fahrweise des Fahrers, die verbleibende Reichweite des Fahrzeugs 1 berechnet.

Des Weiteren ist in dem Fahrzeug 1 eine Einrichtung 5 vorgesehen, die dazu dient, den Ladezustand des Energiespeichers 3 und/oder die mit der in dem Energiespeicher 3 gespeicherten Energie zurücklegbare, Restdistanz des Fahrzeugs 1 an ein sich außerhalb des Fahrzeugs 1 befindliches mobiles Endgerät 6 zu übertragen. Im vorliegenden Fall ist die Einrichtung 5 auch mit dem Energiespeicher 3 verbunden. Die Datenübertragung von der Einrichtung 5 zu dem mobilen Endgerät 6 kann mit an sich bekannten Mitteln durchgeführt werden und wird daher hierin nicht näher beschrieben.

Das mobile Endgerät 6 kann zum Beispiel als Mobiltelefon oder als eine zum Öffnen und Schließen des Fahrzeugs 1 und/oder zum Starten und Stoppen des Elektromotors 2 dienende Einrichtung ausgebildet sein. Im vorliegenden Ausführungsbeispiel handelt es sich bei dem mobilen Endgerät 6 um einen Schlüssel 6a, auf dem eine Anzeigeeinrichtung 7, wie zum Beispiel ein an sich bekanntes Display, angeordnet ist, mit der der Ladezustand des Energiespeichers 3 und/oder die mit der in dem Energiespeicher 3 gespeicherten Energie zurücklegbare Restdistanz des Fahrzeugs 1 angezeigt werden kann. Unter dem Begriff "Schlüssel" sind auch Einrichtungen wie Scheckkarten oder ähnliches zu verstehen, mit denen sich der Fahrer Zugang zu dem Fahrzeug 1 verschaffen und/oder den Elektromotor 2 desselben starten kann. Mit dem Begriff "Mobiltelefon" ist jede Kommunikationseinrichtung gemeint, die in dem Fahrzeug 1 mitgeführt werden kann. Es ist dabei nicht notwendigerweise erforderlich, dass innerhalb des Fahrzeugs 1 eine Verbindung dieses Mobiltelefons mit einem Mobilfunknetz hergestellt werden kann.

In der Speichereinrichtung 4 wird ständig bzw. in bestimmten zeitlichen Abständen der Ladezustand des Energiespeichers 3 und/oder die mit der in dem Energiespeicher 3 gespeicherten Energie zurücklegbare Restdistanz des Fahrzeugs 1 gespeichert. Vorzugsweise wird nach dem Abstellen des Elektromotors 2 der Ladezustand des Energiespeichers 3 und/oder die mit der in dem Energiespeicher 3 gespeicherten Energie zurücklegbare Restdistanz des Fahrzeugs 1 an das mobile Endgerät 6 übertragen. Mit der Angabe "nach dem Abstellen des Elektromotors 2" kann beispielsweise eine Übertragung gemeint sein, die unmittelbar beim Abstellen des Elektromotors 2 oder nach dem Abschließen einer Fahrertür 8 des Fahrzeugs 1 an das mobile Endgerät 6 erfolgt.

Die Übertragung des Ladezustands des Energiespeichers 3 und/oder der mit der in dem Energiespeicher 3 gespeicherten Energie zurücklegbare Restdistanz des Fahrzeugs 1 an das mobile Endgerät 6 kann auch zu einem späteren Zeitpunkt erneut erfolgen, z.B. auf Abruf durch den Fahrer. Dies ist beispielsweise sinnvoll bei längeren Standzeiten oder bei Änderungen der Außentemperatur, die sich auf den Ladezustand und damit auf die Reichweite auswirken.

Das mobile Endgerät 6 kann gegebenenfalls auch so ausgebildet sein, dass mit demselben der Ladezustand des Energiespeichers 3 gesteuert werden kann. So ist es beispielsweise möglich, nach dem Anschließen des Energiespeichers 3 an eine entsprechende Ladeeinrichtung von einer normalen Ladeleistung mittels des mobilen Endgeräts 6 auf eine Schnellladung umzuschalten, so dass bis zu einem vorbestimmten Abfahrtszeitpunkt des Fahrzeugs 1 der Energiespeicher 3 so weit aufgeladen ist, dass eine bestimmte, gegebenenfalls auch über das mobile Endgerät 6 eingebbare Reichweite erreicht werden kann. Prinzipiell könnte über das mobile Endgerät 6 auch ein Befehl zur Aufladung des Energiespeichers, gegebenenfalls verbunden mit einem gewünschten Abfahrtszeitpunkt, eingegeben werden und eine nicht dargestellte Steuereinrichtung in dem Fahrzeug 1 könnte einen geeigneten Zeitpunkt zum Starten eines Ladevorgangs berechnen und den Ladevorgang starten. Zum Berechnen eines geeigneten Zeitpunkts können Kriterien wie eine Schonung des Energiespeichers 3, eine hohe Geschwindigkeit beim Laden des Energiespeichers 3 oder ein geringer Preis für das Laden berücksichtigt werden. Eine zum Aufladen des Energiespeichers 3 dienende Einrichtung an dem Fahrzeug 1, wie beispielsweise ein Stecker oder eine Steckdose, ist in Fig. 1 mit dem Bezugszeichen 9 bezeichnet.

## Patentansprüche

1. Verfahren zum Betreiben eines mit einem Elektromotor (2) antreibbaren Fahrzeugs (1), wobei der Elektromotor (2) aus einem Energiespeicher (3) mit elektrischem Strom versorgt wird, wobei eine mit der in dem Energiespeicher (3) gespeicherten Energie zurücklegbare Restdistanz in einer Speichereinrichtung (4) abgespeichert wird, wobei nach dem Abstellen des Elektromotors (2) die mit der in dem Energiespeicher (3) gespeicherten Energie zurücklegbare Restdistanz des Fahrzeugs (1) mittels einer mit der Speichereinrichtung (4) verbundenen Einrichtung (5) an ein mobiles Endgerät (6) übertragen wird, **dadurch gekennzeichnet, dass** die mit der in dem Energiespeicher (3) gespeicherten Energie zurücklegbare Restdistanz an eine zum Öffnen und Schließen des Fahrzeugs (1) und/oder zum Starten und Stoppen des Elektromotors (2) dienende Einrichtung übertragen wird.

2. Verfahren nach Anspruch 1,
**dadurch gekennzeichnet, dass**
nach dem Abstellen des Elektromotors (2) zusätzlich der Ladezustand des Energiespeichers (3) mittels der mit der Speichereinrichtung (4) verbundenen Einrichtung (5) an das mobile Endgerät (6) übertragen wird.

3. Verfahren nach Anspruch 1 oder 2,
**dadurch gekennzeichnet, dass**
der Ladezustand des Energiespeichers (3) und/oder die mit der in dem Energiespeicher (3) gespeicherten Energie zurücklegbare Restdistanz beim Abstellen des Elektromotors (2) übertragen wird.

4. Verfahren nach Anspruch 1, 2 oder 3,
**dadurch gekennzeichnet, dass**
der Ladezustand des Energiespeichers (3) und/oder die mit der in dem Energiespeicher (3) gespeicherten Energie zurücklegbare Restdistanz beim Abschließen einer Fahrertür (8) des Fahrzeugs (1) übertragen wird.

5. Verfahren nach einem der Ansprüche 1 bis 4,
**dadurch gekennzeichnet, dass**
der Ladezustand des Energiespeichers (3) und/oder die mit der in dem Energiespeicher (3) gespeicherten Energie zurücklegbare Restdistanz an ein Mobiltelefon übertragen wird.

6. Verfahren nach Anspruch 1,
**dadurch gekennzeichnet, dass**
als zum Öffnen und Schließen des Fahrzeugs (1) und/oder zum Starten und Stoppen des Elektromotors dienende Einrichtung ein Schlüssel (6a) verwendet wird.

7. Fahrzeug (1) mit einem Elektromotor (2) zum Antrieb desselben, mit einem Energiespeicher (3) zur Versorgung des Elektromotors (2) mit elektrischem Strom, mit einer Speichereinrichtung (4) zum Speichern einer mit der in dem Energiespeicher (3) gespeicherten Energie zurücklegbaren Restdistanz, mit einer mit der Speichereinrichtung (4) verbundenen Einrichtung (5) zum Übertragen der mit der in dem Energiespeicher (3) gespeicherten Energie zurücklegbaren Restdistanz des Fahrzeugs (1) an ein mobiles Endgerät (6), **dadurch gekennzeichnet, dass** das mobile Endgerät (6) als eine zum Öffnen und Schließen des Fahrzeugs (1) und/oder zum Starten und Stoppen des Elektromotors (2) dienende Einrichtung ausgebildet ist.

8. Fahrzeug nach Anspruch 7,
**dadurch gekennzeichnet, dass**
die mit der Speichereinrichtung (4) verbundene Einrichtung (5) zusätzlich zum Übertragen des Ladezustands des Energiespeichers (3) an das mobile Endgerät (6) ausgebildet ist.

## Claims

1. A process of operating, a an electric motor (2) driven vehicle (1), whereby the electric motor (2) is supplied from an energy store (3) with electric current, whereby the remaining distance to be covered with the energy stored in the energy store (3) is stored in a storage device (4), whereby after switching off the electric motor (2) the remaining distance to be covered with the energy stored in the energy store (3) of the vehicle (1) is transmitted by means of a device (5) connected with the storage device (4) to a mobile terminal device (6), **characterised in that** the remaining distance to be covered with the energy stored in the energy store (3) is transmitted to a device serving for opening and closing the vehicle (1) and/or starting and stopping the electric motor (2) serving device.

2. The process according to claim 1, **characterised in that** after stopping the electric motor (2) the state of charge of the energy store (3) is in addition transmitted by means of the device (5) connected to the storage device (4) to the mobile terminal device (6).

3. The process according to claim 1 or 2, **characterised in that** the state of charge of the energy store (3) and/or the remaining distance to be covered with the energy stored in the energy store (3) are/is transmitted on stopping the electric motor (2).

4. The process according to claim 1, 2 or 3, **characterised in that** the state of charge of the energy store (3) and/or the remaining distance to be covered with the energy stored in the energy store (3) are/is transmitted on closing a driver door (8) of the vehicle (1).

5. The process according any one of claims 1 to 4, **characterised in that** the state of charge of the energy store (3) and/or the remaining distance to be covered with the energy stored in the energy store (3) are/is transmitted to a mobile phone.

6. The process according to claim 1, **characterised in that** a key (6a) is used for opening and closing the vehicle (1) and/or starting and stopping the electric motor serving device.

7. A vehicle (1) with an electric motor (2) for driving the same, with an energy store (3) for supplying the electric motor (2) with electric current, with a storage device (4) for storing a remaining distance to be covered with the energy stored in the energy store (3), with a device (5) connected to the storage device (4) for transmitting the remaining distance to be covered of the vehicle (1) with the energy stored in the energy store (3) to a mobile terminal device (6), **characterised in that** the mobile terminal device (6) is. arranged as a device for opening and closing the vehicle (1) and/or starting and stopping the electric motor (2) serving device.

8. The vehicle according to claim 7, **characterised in that** the device (5) connected to the storage device (4) is additionally designed for transmitting the state of charge of the energy store (3) to the mobile terminal device (6).

## Revendications

1. Procédé pour faire fonctionner un véhicule (1) pouvant être entraîné avec un moteur électrique (2), le moteur électrique (2) étant alimenté en courant électrique à partir d'un accumulateur d'énergie (3), une distance restante qui peut être parcourue avec l'énergie stockée dans l'accumulateur d'énergie (3) étant mémorisée dans un dispositif de mémoire (4), la distance restante qui peut être parcourue par le véhicule (1) avec l'énergie stockée dans l'accumulateur d'énergie (3) étant transmise après l'arrêt du moteur électrique (2) à un terminal mobile (6) au moyen d'un dispositif (5) relié au dispositif de mémoire (4), **caractérisé en ce que** la distance restante qui peut être parcourue avec l'énergie stockée dans l'accumulateur d'énergie (3) est transmise à un dispositif servant à ouvrir et fermer le véhicule (1) et/ou à démarrer et arrêter le moteur électrique (2).

2. Procédé selon la revendication 1, **caractérisé en ce que**, après l'arrêt du moteur électrique (2), l'état de charge de l'accumulateur d'énergie (3) est transmis en plus au terminal mobile (6) au moyen du dispositif (5) relié au dispositif de mémoire (4).

3. Procédé selon la revendication 1 ou 2, **caractérisé en ce que** l'état de charge de l'accumulateur d'énergie (3) et/ou la distance restante qui peut être parcourue avec l'énergie stockée dans l'accumulateur d'énergie (3) sont transmis lors de l'arrêt du moteur électrique (2).

4. Procédé selon la revendication 1, 2 ou 3, **caractérisé en ce que** l'état de charge de l'accumulateur d'énergie (3) et/ou la distance restante qui peut être parcourue avec l'énergie stockée dans l'accumulateur d'énergie (3) sont transmis lors de la fermeture d'une portière côté conducteur (8) du véhicule (1).

5. Procédé selon l'une des revendications 1 à 4, **caractérisé en ce que** l'état de charge de l'accumulateur d'énergie (3) et/ou la distance restante qui peut être parcourue avec l'énergie stockée dans l'accumulateur d'énergie (3) sont transmis à un téléphone mobile.

6. Procédé selon la revendication 1, **caractérisé en ce que**, comme dispositif servant à ouvrir et fermer le véhicule (1) et/ou à démarrer et arrêter le moteur électrique, on utilise une clé (6a).

7. Véhicule (1) avec un moteur électrique (2) pour l'entraînement de celui-ci, avec un accumulateur d'énergie (3) pour alimenter en courant électrique le moteur électrique (2), avec un dispositif de mémoire (4) pour mémoriser une distance restante qui peut être parcourue avec l'énergie stockée dans l'accumulateur d'énergie (3), avec un dispositif (5) qui est relié au dispositif de mémoire (4) et qui sert à transmettre à un terminal mobile (6) la distance restante qui peut être parcourue par le véhicule (1) avec l'énergie stockée dans l'accumulateur d'énergie (3), **caractérisé en ce que** le terminal mobile (6) est conçu comme un dispositif servant à ouvrir et fermer le véhicule (1) et/ou à démarrer et arrêter le moteur électrique (2).

8. Véhicule selon la revendication 7, **caractérisé en ce que** le dispositif (5) relié au dispositif de mémoire (4) est conçu en plus pour transmettre l'état de charge de l'accumulateur d'énergie (3) au terminal mobile (6).
